# EUROPEAN PATENT APPLICATION

(11) **EP 1 484 371 A2**
(43) Date of publication of application: **08.12.2004**
(21) Application number: 04253051.9
(22) Date of filing: 24.05.2004
(51) Int. Cl.: C09D 167/00, C09D 167/02, C09D 167/04, C09D 167/06, C09D 167/07, C09D 5/03, C08L 67/02, C08L 67/04, C08L 67/06, C08L 67/07, C08L 67/08, B29C 41/00

(54) **Degradable powder coatings, methods and apparatus for powder coating biodegradable substrates and products produced thereby**

(30) Priority: 05.06.2003 US 476122 P
(71) Applicant: ROHM AND HAAS COMPANY, Philadelphia, Pennsylvania 19106-2399 (US)
(72) Inventor: Annan, Nikoi, Sinking Spring Pennsylvania 19608 (US); Horinka, Paul R., Blandon, PA 19510 (US); Tullos, Tina L., Reading Pennsylvania 19606 (US); Zimmerman, Scott A., Schuykill Haven Pennsylvania 17972 (US)
(74) Representative: Kent, Venetia Katherine

(57) **Abstract**

An inventive powder composition comprises one or more than one finely divided resin chosen from a thermoplastic degradable copolyester resin containing both aliphatic and aromatic groups, a degradable UV curable polyester, a mixture of a cyclic oligomeric polyester resin, a ring opening polymerization catalyst and a degradable polyester, a degradable thermosetting polyester resin and mixtures thereof, the powder having an average particle size or diameter, as determined by laser light scattering, of from 30 to 125 µm. The composition provides thin, degradable coatings for foamed and biodegradable substrates, e.g. starch disposal articles. An apparatus for holding foam or light weight substrates comprises one or more than one perforated female pattern or jig molded in the shape of a substrate and a stand for holding said jig(s) having within it at least one enclosed chamber attached to one or more than one vacuum line, wherein the perforations in each of said jig(s) lead into said enclosed chamber. Coatings may be provided by placing a substrate in the jig, applying the powder composition to the substrate, and heating the substrate to flow out or melt said powder and to, with vacuum assistance, coalesce the melt or flow out to form a film to thoroughly coat the substrate.

## Description

The present invention relates to polyester compositions for making at least partially biodegradable coatings, methods for powder coating biodegradable substrates, and powder coated biodegradable articles. In particular, the present invention relates to polyester powder coatings for biodegradable substrates, methods and apparati for making powder coated biodegradable articles, and biodegradable containers having biodegradable powder coatings, e.g. starch food containers, with excellent film appearance.

### BACKGROUND OF THE INVENTION

In recent decades, the use of disposable containers for food service has mushroomed, resulting in a solid waste problem in the ambient surroundings and in landfills. Further, paper disposable containers have been found not to actually biodegrade in landfills. Responding to the solid waste problem, biodegradable disposable starch containers of have recently become widely used. However, such starch articles remain lacking strength and water resistance, to a greater degree than their paper equivalents which lack water resistance anyway.

More recently, the advent of plastic and wax coatings for disposable biodegradable articles has further hampered their biodegradability. Plastic and wax coatings have created a toxics problem from the disposal of and the incineration of hydrocarbon wastes into ordinary solid waste streams and into the air.

To deal with the environmental issues posed by wax and plastic coatings, biodegradable laminates have achieved commercial acceptance for making biodegradable articles more water resistant. Further, laminated films have provided water resistance without any toxic solvents and without requiring further drying. However, lamination processes produce as much as a 50% scrap rate of laminate film. Further, laminated films tend not to adhere to rounded, indented and convoluted areas of a substrate, thereby resulting in additional scrap due to rejects for delamination.

In seeking to avoid lamination processing for biodegradable disposable articles, Japanese Patent Application 2002105887A discloses a two-layer polyester-based biodegradable powder coating for pulp molded substrates, forming coatings without using toxic solvents and without the drying associated with liquid coating processing. However, the 2 to 3 µm resin powder coatings disclosed in the Japanese patent application provide less than a 50 wt. % transfer efficiency onto a substrate when applied to a substrate by electrostatic spraying.

Accordingly, there remains a need for at least partially biodegradable and low cost, water resistant coatings for biodegradable containers and other biodegradable substrates, which resist delamination and scrap production. Further, there remains a need for at least partially biodegradable coating compositions for conferring water resistance and strength to disposable biodegradable articles which do not suffer from poor transfer efficiency. Still further, there remains a need for methods which enable the formation of a water-resistance conferring barrier on starch containing biodegradable articles.

### SUMMARY OF THE INVENTION

The present invention provides powder compositions comprising one or more than one finely divided resin chosen from a thermoplastic degradable copolyester resin containing both aliphatic and aromatic groups, a mixture of a cyclic oligomeric polyester, a ring opening polymerization catalyst and a degradable polyester resin, a degradable UV curable polyester resin, a thermosetting degradable polyester resin and mixtures thereof, wherein the powder has an average particle size or diameter, as determined by laser light scattering, of from 30 to 125 µm, for example from 50 to 75 µm. The phrase "degradable" refers to polymers, coatings, articles and films having at least partial biodegradability, for example 10 wt% or more, which corresponds to the biodegradably hydrolyzable repeat unit content of a polyester, e.g. the adipic acid ester, aliphatic ester or ether repeat unit content. A coating that is degradable will disintegrate as it degrades. Further, enhanced biodegradability may be provided in polyesters by including up to 20 mole %, based on the total number of acid or polyol reactants used to make the polyester, respectively, of an acid or a polyol having 2, 4, 6, 8, 10, or 12 carbon atoms. The composition enables the formation of thin, water resistant coatings having excellent appearance properties, thereby lowering the cost of coating biodegradable substrates, such as starch or starch-plastic blend food service substrates or food containers.

The present invention provides a method of forming a powder coating comprising placing a substrate in a perforated female pattern or jig attached to a vacuum source, applying, with vacuum assistance, an optionally preheated powder coating to the substrate, for example a polyester powder for making degradable coatings, an acrylic powder or an epoxy powder, and heating to flow out the powder and form a coating on a substrate. Such a method may provide 70 wt. % or more, for example 90 wt. % or more, powder transfer efficiency to a substrate. One or more than one jig may be mounted on a stand which is attached to the vacuum source. Further, the process may comprise moving said jig and/or the heat source while heating the coated substrate to flow out the powder on the substrate surface, thereby thoroughly coating all surfaces and pores of the substrate with the powder or a melt of the powder to form a coating. In addition, the method may comprise further curing the coating in the presence of heat or ultraviolet (UV) radiation. A partial or a full vacuum may be applied from under the jig during applying, heating, and/or curing, wherein the vacuum is sufficient to attract powder to the substrate as it is sprayed and to evenly distribute powder over the substrate. Vacuum enables coating of a substrate without any hanging or processing marks that might be made on the substrate. The method may reduce the possibility of delamination by delaying the film formation process because powdered films are given an opportunity to flow into natural pores in the substrate, thereby providing superior mechanical adhesion.

The present invention provides a substrate holding apparatus for coating foamed or biodegradable substrates comprising one or more than one perforated female patterns or jigs that are molded in the shape of a substrate and a base or stand for holding said jig or jigs having within it at least one enclosed chamber, wherein the perforations in said jig or jigs lead into an enclosed chamber in the stand or stands which is attached to one or more than one vacuum line. Each jig may be adjustably fixed to a stand, allowing the jig(s) to be tilted at a desired angle or to lie horizontally. Further, each jig may be rotably mounted on a stand or may be both rotated and spun in an orbit around a vertical axis which is normal to the center point of each jig when it is in a horizontal, bottom end down position, thereby enabling the powder to flow out and thoroughly coat the substrate during heating and curing. Part movement (rotation) is also desirable to keep from overheating the substrate, which will discolor (yellow-brown). Alternatively, one or more than one heat source and/or ultraviolet (UV) lamp may be movably mounted above each jig or jigs so that it may rotate and spin around vertical axis which is normal to the center point of the heat source or bulb when it is pointed straight down, such that the vertical axes of the jig and the heat source may meet to form a single axis and heat may be evenly distributed over the substrate.

### BRIEF DESCRIPTION OF THE DRAWINGS

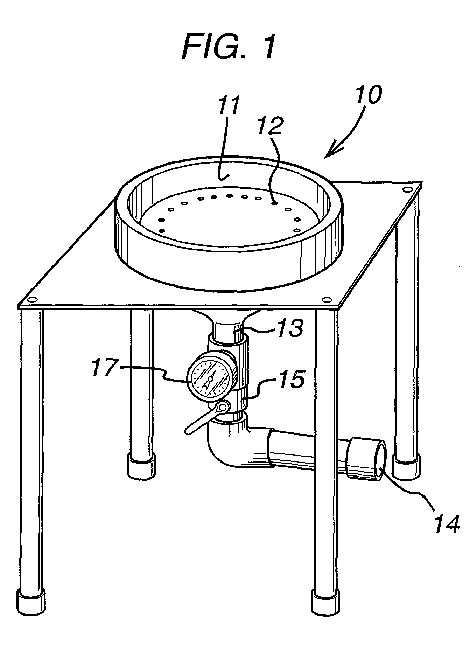

Figure 1 depicts a coating apparatus in accordance with an embodiment of the present invention for coating plates.

### DETAILED DESCRIPTION OF THE INVENTION

The powder compositions of the present invention comprise one or more than one finely divided resin chosen from a degradable copolyester resin containing both aliphatic and aromatic groups, a mixture of a cyclic oligomeric polyester, a ring opening polymerization catalyst and a degradable polyester resin, a degradable UV curable polyester resin, and mixtures thereof. The composition enables the formation of a thin, water resistant coating having excellent appearance properties, thereby lowering the cost of making the degradable coating. The composition further offers an immediate advantage of reducing scrap through reclaiming of powder material.

As used herein, the phrase "acid number" refers to the number of mg KOH required to neutralize the alkali-reactive groups in 1 g of polymer and has the units (mg KOH/g polymer). The acid number is determined according to ASTM standard test method D 1639-90.

As used herein, the phrase "average particle size or diameter", refers to particle diameter as determined by laser light scattering using a Malvern Instruments, Malvern, PA, device located at the Rohm and Haas powder coatings Reading, PA Facility, Equipment Serial #: 34315-33.

As used herein, the "glass transition temperature" or Tg of any polymer may be calculated as described by Fox in *Bull. Amer. Physics. Soc.,* 1, 3, page 123 (1956). The Tg can also be measured experimentally using differential scanning calorimetry (rate of heating 20°C. per minute, Tg taken at the midpoint of the inflection). Unless otherwise indicated, the stated Tg as used herein refers to the calculated Tg.

As used herein, the melting point or Tm of any polymer or resin may be experimentally measured using differential scanning calorimetry (DSC), with the Tm measured as the middle of the peak corresponding to melting in the DSC curve.

As used herein, the phrase "hydroxyl number" refers to the number of milligrams (mg) of KOH equivalent to the hydroxyl groups present in each gram (g) of polymer and has the units (mg KOH/g polymer).

As used herein, unless otherwise indicated, the phrase "per hundred parts resin" or "phr" means the amount, by weight, of an ingredient per hundred weight parts of the total amount of resin or polymer contained in a coating powder, including crosslinking resins.

As used herein, unless otherwise indicated, the phrase "resin" includes, independently, polymers, oligomers, monomers, copolymers, terpolymers, block copolymers, segmented copolymers, prepolymers, graft copolymers, and any mixture or combination thereof.

As used herein, the phrase "wt. %" stands for weight percent.

As used herein, unless otherwise indicated, the phrase "acrylic" means acrylic, methacrylic, acrylate and methacrylate, and any mixture or combination thereof.

Suitable polyester resins for degradable coatings may include any crystalline thermoplastic aliphatic-aromatic copolyesters having a melting point Tm of 40°C or more, for example 50°C to 300°C, any amorphous thermoplastic aliphatic-aromatic copolyesters or thermosetting aliphatic-aromatic copolyesters having a Tg of 40°C or more, for example 50°C to 110°C. Such resins may comprise the reaction product of 10 mole % or more, for example 20 mole % or more, or 40 mole % or more and 99 mole % or less, such as 90 mole % or less, 80 mole % or less, or 60 mole % or less of aliphatic acid repeating units, based on the number of moles of all of the acids used to make the copolyester. The presence of aromatic groups increase the melting point (MP) and the glass transition temperature (Tg) of the resin. Thus, for applications requiring heat resistance, e.g. hot food service articles like coffee cups, trays and warmers, the aromatic acid reactants may comprise from 70 to 90 mole%, based on the number of moles of acid reactants used to make a suitable copolyester, and all of the diols may be aliphatic.

Exemplary thermoplastic copolyesters may comprise essentially linear, random copolymers, comprising as monomeric units two or more than two aliphatic reactants and one or more than one aromatic reactant, wherein the reactants may comprise one or more than one dicarboxylic or polycarboxylic acid and one or more than one diol or polyol, or may comprise one or more than one hydroxyalkanoic acid, and may additionally comprise one or more than one dioxanone, or aliphatic carbonate. Thermoplastic copolyesters that form degradable coatings may also be branched, provided that the number of main chain atoms, including carbon and oxygen atoms, between branches is sufficiently large to enable mechanical, hydrolytic or bacterially caused biodegradation. Branching that is not more frequent than, for example, once every 15 atoms, once every 20 atoms, or once every 30 atoms along the main chain will still enable degradability. Branched degradable thermoplastic copolyesters may comprise along the main chain the reaction product of up to 15 mole %, for example from 1.0 to 10 mole % or, in another example, from 2.0 to 7.5 mole % of a tri-functional or higher functional carboxylic acid or polyol, based on the number of moles of all acid reactants in the case of acid reactants or based on the number of moles of all polyol reactants in the case of polyols.

Copolyesters having enhanced biodegradability may comprise the reaction product of one aromatic reactant, and three aliphatic reactants including one or more than one aliphatic diol or polyol, and one or more than one aliphatic diacid. One or more than one aliphatic reactants may be chosen from diols, polyols or diacids having 2, 4, 6, 8, 10 or 12 carbon atoms, such as ethylene glycol, butylene glycol, hexanediol, di(ethylene glycol), di(propylene glycol), tri(ethylene glycol), tetra(ethylene glycol), penta(ethylene glycol) and hexa(ethylene glycol); or diacids, such as oxalic, succinic, or adipic acid. Further, the lowest mole % of any 2, 4, 6, 8, 10 or 12 carbon diol, polyol or diacid, may range from 0 to 20 mole%, for example 0.5 to 10 mole %, or 1 to 5 mole %, based on the total number of moles of diol and polyol reactants or acid reactants, respectively, in the polyester. For example a suitable polyester may comprise polybutylene terephthalate-co-adipate-co-succinate (50/45/5), wherein the parenthetical numbers represent the mole % of each acid reactant, based on the total number of moles of acid reactants present, or may comprise polybutylene-co-diethylene (90/10) terephthalate-co-adipate (50/50), wherein the parenthetical numbers represent the mole % of each polyol and the mole % of each acid reactant, based, respectively, on the total number of moles of diol or polyol reactants present and on the total number of moles of acid reactants present.

Suitable aromatic reactants may include aromatic diacids, such as 1,4-terephthalic, 1,3- terephthalic, isophthalic, tetrahydrophthalic, hexahydrophthalic, 2,6-naphthoic, 1,5-naphthoic, and ester forming derivatives thereof, and combinations thereof.

Suitable aliphatic reactants may include diols, such as C1 to C12 alkanediols (alkylene glycols). Diols having 2, 4, 6, 8, 10 and 12 carbon atoms for enhanced biodegradability may include ethylene glycol, di(ethylene glycol), i.e. a dimer of ethylene glycol, tri(ethylene glycol), tetra(ethylene glycol), penta(ethylene glycol), di(propylene glycol), cyclobutanediol, 1,3- butanediol, 1,4-butanediol (tetramethylene glycol), 1,6-hexanediol, 1,3-cyclohexanedimethanol, 1,4-cyclohexanedimethanol, or 2,2,4,4-tetramethyl-1,3-butanediol and combinations thereof; other diols may include propylene glycol, 2,2-dimethyl-1,3-propanediol, 1,5-pentanediol, 2,2,4-trimethyl-1,6-hexanediol, thiodiethanol, and combinations thereof; and polyether polyols, such as poly(alkylene glycols). Aliphatic diacids having 2, 4, 6, 8, 10 or 12 carbon atoms for enhanced biodegradability may include oxalic, succinic, adipic, 1,4-cyclohexanedicarboxylic, 1,3-cyclohexanedicarboxylic, diglycolic, suberic, sebacic, or 1,12-dodecanedioic acid, and their mixtures; other aliphatic diacids, such as glutaric, malonic, pimelic, azelaic, 2,2-dimethyl glutaric, 1,3-cyclopentanedicarboxylic, itaconic, maleic, 2,5-norbornanedicarboxylic, and combinations thereof; hydroxycarboxylic acids, such as lactic acid, glycolic acid, hydroxybutyric acid, 3-hydroxyvaleric acid, as wells as the lactides, lactones, and oligomers thereof; lactams, such as s-caprolactone; and aliphatic carbonates and dioxanones, such as trimethylene carbonate and p-dioxanone. In addition, amounts of from 0 to 97 phr, for example 0.1 to 50 phr, 2 to 35 phr, or 5 to 25 phr of a composition comprising a cyclic oligomeric polyester, a degradable polyester and a ring opening polymerization catalyst may be included as a reactant in admixture with a polyester powder to enhance biodegradability, enhance the friability of the resin into a powder, e.g. without cryogrinding, and to enhance the resin film-forming properties.

Alternatively, a thermosetting polyester, such as one comprising tri-functional and higher functional end-chain units or end-chain and main-chain units, may be used for making a degradable coating. Thermally curable or thermosetting degradable copolyesters may comprise the reaction product of up to 15 mole %, for example from 1.0 to 10 mole % or, in another example, from 2.0 to 7.5 mole % of a tri-functional or higher functional carboxylic acid or polyol, based on the number of moles of all acid reactants in the case of acid reactants or based on the number of moles of all polyol reactants in the case of polyols. Exemplary tri-functional and higher functional polyols, may be glycerol, pentaerythritol, trimethylpropane, methyl-2-hydroxymethyl-1,3-propanediol, 2-ethyl-2-hydroxymethyl-1,3-propanediol; or polyacids, such as C3 to C8 alkanetricarboxylic acids, citric acid and trimesic acid; or diacids having hydroxyl groups, such as malic acid. Hydroxyl functional thermosetting degradable copolyesters should have lower hydroxyl numbers to prevent cracking in coatings, e.g. from 2 to 15, such as from 2 to 10. Carboxyl functional thermosetting degradable copolyesters should have hydroxyl numbers of from 2 to 50, such as from 5 to 25. The remainder of the reactants used to make a thermosetting degradable polyester may comprise aliphatic or aliphatic and aromatic diacids and diols, such as those used to make thermoplastic degradable polyesters. Curing of thermosetting polyesters may simply result from heating, although from 0.1 to 5 phr, for example from 0.2 to 3 phr of curing agents, such as β-hydroxyalkylamides, polyamines and aliphatic diamines, such as C1 to C6 alkylenediamines like ethylenediamine, may be added to improve through cure. Cationic curing catalysts, such as ethyltriphenylphosphine bromide (ETPPB) or iodide (ETPPI), may be added in amounts of from 0.01 to 2 phr, for example from 0.05 to 1 phr to speed curing.

The preparation of polyesters may be carried out at temperatures from 150°C to 300°C in the presence of polycondensation catalysts such as titanium tetrachloride, manganese diacetate, antimony oxide, dibutyl tin diacetate, zinc chloride, or combinations thereof. The catalysts are typically employed in amounts of from 10 to 1000 ppm (parts per million), based on total weight of the reactants.

Examples of useful aliphatic-co-aromatic copolyesters may include polybutylene adipate-co-terephthalate, polyethylene adipate-co-terephthalate, polyethylene-co-butylene adipate-co-terephthalate, polybutylene adipate-co-succinate-co-terephthalate, polybutylene-co-hexylene adipate-co-terephthalate, polybutylene adipate-co-malonate-co-terephthalate, polybutylene-co-diethylene adipate-co-terephthalate, polybutylene-co-triethylene adipate-co-terephthalate, polybutylene-co-dipropylene adipate-co-terephthalate, segmented copolymers of polybutylene adipate (PBA) and polyethylene terephthalate (PET), polyethylene succinate-co-terephthalate, the block copolymer formed by the reaction of PET and an L-lactic acid polymer, and PET-co-poly(β-hydroxybutyrate-co-valerate) block copolymers.

Specific examples of useful copolyesters may include, with reactant mole %, based on the number of moles of all acid reactants, in parentheses, polybutylene succinate (30-85%)-co-adipate (0-10%)-co- terephthalate (25-60%); polybutylene adipate (30-65%)-co-succinate (0-10%)-co- terephthalate (25-60%); polybutylene adipate (30-65%)-co-oxalate (0-10%)-co- terephthalate (25-60%); poly(butylene glutarate-co-terephthalate-co-diglycolate) (50/45/5), poly(butylene adipate-co-terephthalate) (40-60/60-40), poly(butylene adipate-co- terephthalate) (10-20/80-90), poly(butylene oxalate-co-terephthalate) (40-60/60-40), poly(butylene succinate-co-terephthalate) (70/30), poly(ethylene succinate-co-terephthalate) (70/30), and poly(butylene oxalate-co-terephthalate) (70/30).

Specific examples of useful copolyesters may include, with reactant polyol mole %, in parentheses, based on the number of moles of all polyol reactants, and with acid reactant mole %, in parentheses, based on the number of moles of all acid reactants, polybutylene(90-100%)-co-ethylene(0-10%) adipate (40-75%)-co-terephthalate (25-60%); polybutylene(90-100%)-co-hexylene(0-10%) adipate (40-75%)-co-terephthalate (25-60%); polybutylene(90-100%)-co-ethoxyethylene(0-10%) adipate (40-75%)-co-terephthalate (25-60%); polybutylene(90-100%)-co-ethoxyethoxyethylene(0-10%) adipate-co-terephthalate (10-90/90-10).

Suitable UV curable polyesters for making degradable coatings may include aliphatic or primarily aliphatic unsaturated polyesters having terminal unsaturation groups, or a mixture or terminal unsaturation groups and unsaturation along the main chain. Suitable unsaturated polyesters may have weight average (Mw) molecular weights, as determined by gel permeation chromatography, of from 400 to 10,000, for example 1,000 to 4,500, and a degree of unsaturation of from 0.5 to 20 wt. %, for example from 1.0 to 10 wt. %, or from 1.5 to 6 wt. % based on the weight of the unsaturated polyester resin. Examples of such resins may comprise prepolymers such as (meth)acrylic terminated aliphatic polyesters, vinyl terminated aliphatic polyesters, e.g. those made from vinyl ethers and carboxyl-terminated polyesters, and degradable polyesters, such as thermoplastic polyesters useful in the present invention. Further useful UV curable polyesters may comprise copolymers having as repeat units in addition to unsaturated repeat units, one or more than one of any aliphatic or di- or polyfunctional carboxylic acids (or their anhydrides) and any di- or polyhydric alcohols used to make biodegradable aliphatic polyesters, or hydroxyalkanoic acids, lactones, lactides or aliphatic carbonates used to make biodegradable aliphatic polyesters. Unsaturation may be supplied by a carboxylic acid, although it is possible to supply it through the alcohol, i.e. allyl alcohol. Units of monohydric alcohols, e.g. allyl alcohol, or monofunctional carboxylic acids, for example, acrylic acid, methacrylic acid (or their C1 to C8 alkyl esters) may be employed for chain termination purposes. Suitable ethylenically unsaturated di- or polyfunctional carboxylic acids (or their anhydrides) for making unsaturated polyesters may include maleic anhydride, fumaric acid, itaconic anhydride, citraconic anhydride, mesaconic anhydride, aconitic acid, tetrahydrophthalic anhydride, nadic anhydride, dimeric methacrylic acid, trimellitic acid, pyromellitic anhydride, and the like. Units of suitable unsaturated alcohols may include trimethylolpropane monoallyl ether, trimethylolpropane diallyl ether, glycerol allyl ether, pentaerythritol diallyl ether; pentaerythritol triallyl ether, glycerol diallyl ether and oxirane precursors of allyl alcohols, e.g. allyl glycidyl ether.

Suitable UV initiators for curing degradable polyesters may include, for example, alpha cleavage photoinitiators, hydrogen abstraction photoinitiators, and the like. Suitable alpha cleavage photoinitiators include, for example, benzoin, benzoin ethers, benzyl ketals, such as benzyl dimethyl ketal, acyl phosphines, such as diphenyl (2,4,6-trimethyl benzoyl) phosphine oxide, aryl ketones, such as 1-hydroxy cyclohexyl phenyl ketone, and the like. Suitable hydrogen abstraction photoinitiators include, for example, Michler's ketone, and the like. Examples of radical photoinitiators useful in the present invention are dimethoxy phenyl acetophenone, and 2-hydroxy, ethoxyphenyl, 2-hydroxy, 2-methylpropane-1-one. Amounts of UV initiators may range from 0.05 to 3 phr, for example from 0.10 to 2 phr or from 0.30 to 1 phr.

To produce powders of the soft and somewhat rubbery degradable aliphatic-co-aromatic copolyester resins or UV curable polyester resins, ambient grinding should be avoided. Powders may be formed by cryo grinding in liquid nitrogen or liquid carbon dioxide, for example liquid nitrogen, or they may be produced by aqueous suspension or precipitation polymerization, with shear, in a nitrogen atmosphere and in the presence of a transesterifying catalyst, e.g. trialkoxy tin, a cationic cure catalyst as described for curing thermosetting degradable copolyesters, e.g. ETTPI, or an aliphatic primary, secondary or tertiary amine, diamine or triamine. Cryogenic grinding to an average particle size of from 30 to 125 µm, for example from 50 to 75 µm, followed by screening through one or more than one mesh screen provides thin, smooth and pinhole free films. For example, a polyester resin is ground cryogenically with from 0.05 to 2.0 wt. %, for example from 0.1 to 1.2 wt. %, or from 0.2 to 1.0 wt. %, of a dry flow additive, such as silica, and is then sifted through a 140 mesh to 325 mesh screen, e.g. from 175 to 250 mesh. Screening just prior to use may be desired to break up resins that have partially blocked on storage.

Compositions comprising cyclic polyester oligomers may be provided in finely divided powder form by grinding to a desired particle size at temperatures from 0°C to 40°C, i.e. without cryogrinding. Compositions comprising cyclic polyester oligomers may be obtained by the admixture of one or more than one cyclic aromatic and/or aliphatic polyester oligomer with one or more than one ring opening polymerization catalyst and one or more than one degradable polyester, e.g. a linear polyester made from a 1 to 12 carbon diol and a 1 to 12 carbon diacid in the presence of a non-sterically hindered amine, e.g. N-methyl heterocyclic monoamines such as N-methyl-pyrrolidine, as a catalyst, under anhydrous conditions. Compositions of cyclic oligomeric polyesters may be advanced after application with a ring opening polymerization catalyst such as basic reagents, tin alkoxides, organotin compounds (i.e. compounds containing a Sn-C bond), titanate esters and metal acetylacetonates. Suitable basic reagents may include alkali metal hydroxides and phosphines. Such catalysts may be used in amounts of from 0.01 to 4.0, for example 0.02 to 2.0 mole percent, based on the number of moles of repeat units in the oligomers.

Useful cyclic polyester oligomers thus prepared may have degrees of polymerization from 2 to 12 and may be predominantly dimer, trimer, tetramer and pentamer. For example, cyclic polyester oligomers may comprise cyclic oligomeric polybutylene terephthalate (PBT), PET, PBA, polyethylene adipate, polyethylene succinate, polyethylene oxalate, and polybutylene succinate. To insure degradability in a coating, a cyclic polyester oligomer and polyester composition should comprise the reaction product of from 5 to 100 mole %, for example from 10 to 80 mole %, from 20 to 60 mole %, of aliphatic acid or polyol reactants, based, respectively, on the number of moles of all acid reactants and polyol reactants.

Cyclic polyester oligomer compositions may be blended with one or more than one cryoground degradable polyester in the amount of from 0 to 97 phr, for example 0.1 to 50 phr, 2 to 35 phr, or 5 to 20 phr, based on the total weight of cryoground polyester and cyclic oligomer, and a transesterifying catalyst in amounts useful to advance such a cyclic oligomer to improve the flow of a powder coating.

Suitable additives for use in degradable powders may comprise pigments and fillers, optical brighteners, dry flow aids, and anti-cratering agents, degassing agents, thixotropes, melt flow aids or leveling agents, such as low molecular weight acrylic polymers absorbed onto silica gel and polyethylene oxide waxes, anti-oxidants, plasticizers, lubricants, such as glycerine esters or a mix of complex glycerol esters with glycerine esters, and other additives may also be present. Such additives may be added by co-dispersion with resins in an extruder, prior to grinding, for example at temperatures below the melting point of resins such as cyclic oligomers or in a melt of a polyester resin, or by dry blending, e.g. hand blending or, if applicable, grinding in a ball mill, jet mill or air classifying mill. Fillers find use in reducing the cost of degradable coatings, and may include calcium carbonate, titanium dioxide, alumina, talc, silica, wollastonite, mica, mixed metal oxides and bentonite clays. Fillers may be used in the amount of 0 phr or more, for example more than 10 phr, or more than 20 phr and less than 200 phr, for example less than 150 phr, or less than 120 phr. Metal oxide pigments and organic pigments in amounts of from 5 to 60 phr, exemplify pigments that may be used. An optical brightener, exemplified by 2,2'-(2,5-thiophenediyl) bis-[5-t- butylbenzoxazole], sold under the trademark UVITEX OB, may be present at from 0.1 to 0.5 phr. Dry flow aids useful in the present invention may include silica, alumina, fume magnesia, silica coated titanium dioxide, metal oxides, and precipitated silica, for example amorphous silica or precipitated silica. Dry flow aids may be used in amounts of 0.05 phr or more, such as 0.1 phr or more, or 0.2 phr or more and less than 2.0 phr, for example less than 1.2 phr, or less than 1.0 phr. Polyester powders may be hand blended or, in the case of cyclic oligomeric polyesters, co-ground, with 0.2 phr or more, for example 0.5 phr or more, or 0.8 phr or more to less than 2.5 phr, such as less than 1.5 phr, or less than 1.2 phr of an oligomeric acrylate polymer melt flow or anti-cratering agent.

Anti-oxidants may also be used in amounts of from 0.1 phr, such as from 0.5 phr, to 3.0 phr or less, such as 2.0 phr or less to prevent the browning or discoloration of the coatings. Examples of the anti-oxidants that are useful in this invention may include citric acid, ascorbic acid, sodium hypophosphite, tris-(2,4-di-t-butyl phenyl) phosphite, calcium bis([monoethyl(3,5-di-t-butyl-4-hydroxybenzyl) phosphonate], 1,1,3-tris((2-methyl-4-hydroxy-5-t-butylphenyl)butane), dilauryl thiodipropionate, tetrakis(methylene(3,5-di-t-butyl-4-hydroxyhydrocinnamate))methane, or pentaerythritol tetrakis [3-(3,5-ditertbutyl-4-hydroxyphenyl) propionate]. Mixtures of anti-oxidants may be used.

Surprisingly, the present inventors discovered that lubricant additives provide powder compositions that enable the formation of thin films on a foam or starch foam substrate, for example 1 to 4 mils (25.4 to 101.6 µm), or 2 to 3 mils (50.8 to 76.2 µm). Films may be as thick as 10 mils (254.0 µm). Suitable lubricants may include glycerine esters or a mix of complex glycerol esters with glycerine esters, for example, 40% esterified glycerol monostearate, 95% esterified glycerol monostearate, a mixture of glycerides and hydrogenated castor oil, hexanedioic acid and its fatty esters, pentaerythritol tetrastearate, 1,2 benzenedicarboxylic acid mixed cetyl and stearyl ester, or a cetyl/stearyl stearate mixture (35/65 wt%/wt%). Suitable lubricants may be used in amounts of 0.05 phr or more, for example 1 phr or more or 2 phr or more, and may be used in amounts of 12 phr or less, for example 10 phr or less, or 7 phr or less.

To form powder coating compositions, thermosetting or thermoplastic copolyesters or UV curable polyesters may be cryogenically ground to a desired particle size and then hand blended with any one or more than one additive or any additional one or more than one degradable polymer in the amounts given. Alternatively, cyclic oligomeric polyester compositions may be dry blended with any one or more than one additive in the amounts given, such as by co-grinding in a ball mill or an air classifying mill. Further, any one or more than one cryoground resin, cyclic oligomer and additive may be dry blended.

Methods for powder coating a biodegradable or foam substrate may comprise placing a substrate in a perforated female pattern or jig attached to a vacuum source, applying, optionally with vacuum assistance, an optionally preheated powder coating to the substrate, for example a powder for making a degradable coating, an acrylic powder or an epoxy powder, and heating to flow out or melt and form a coating or to cure the powder on the substrate surface, optionally while applying a vacuum after flow out or melt. Such a method may provide 70% or more, for example 90% or more, transfer efficiency to a substrate when air fluidized. Moving said jig and/or one or more than one heat source, either by hand or through the use of a movable jig or heat source, while applying powder and/or while heating to flow out, allows for thorough coating of all surfaces and pores. "Moving" a substrate, as used herein, may refer to rotating, spinning, orbiting, vibrating, rocking, or any combination thereof wherein the powder or melt on the surface of the substrate does not fall off or flow off of the substrate. If desired, one may cure the flowed out coating in the presence of ultraviolet (UV) radiation or additional heat.

Partial or full vacuum may be applied from under the jig during any of applying, heating, and/or curing, for example, after a film has formed during heating wherein such vacuum is sufficient to attract powder to the substrate as it is sprayed and to evenly distribute powder over the substrate. The vacuum serves to hold the substrate in place as well as to draw powder onto the substrate and assist application, e.g. the electrostatic deposition process. In this manner, the substrate actually serves as a filter through which the powder-laden air is drawn and the vacuum enables coating without any hanging or processing marks that might be made on the substrate. Vacuum strength may range from 0 mm/Hg or more, for example 20 mm/Hg or more or 50 mm/Hg or more, up to 500 mm/Hg, for example from 50.75 mm/Hg to 253.8 mm/Hg. The method may reduce the possibility of delamination by delaying the film formation process because a powdered film is given an opportunity to flow into natural pores in the substrate, thereby providing superior mechanical adhesion.

Once coated, any one or more than one substrate may be drawn into one or more than one heating zone, in a continuous process, or placed into said heating zone(s) in a process carried out by hand, wherein an IR lamp may be placed from 6 to 18 inches, for example from 8 to 12 inches from the substrate. Infrared (IR) energy, for example medium wave IR energy, may be applied to the substrate at 75% of maximum intensity until the powder melts and flows. The same energy may be applied to a thermoset coating after flow out to cure the coating. Energy to flow out and cure may emanate from an Infrared (IR) lamp or a convection oven. For example medium wave IR energy may be applied to the substrate at 75% of maximum intensity until the powder melts and flows, typically from 30 seconds to 20 minutes, for example from 3 to 10 minutes for thermoplastic powders, from 5 to 20 minutes for thermosetting curing powders, and from 30 seconds to 5 minutes in handling UV curing powders, which are then UV cured for from 30 seconds to 10 minutes, for example from 45 seconds to 6 minutes, or from 1 to 4 minutes. In any method, the surface of the substrate may reach from 170°C to 260°C, for example from 200°C to 235°C, and may reach from 170°C to 220°C for UV curable powders. The coated substrate may then be cooled.

Substrate, jig and/or heat source movement during heating may be desired to keep from overheating the substrate, which can discolor (yellow-brown). Accordingly, in an embodiment of a process of the present invention, one or more than one jig is movably mounted on a substrate holder, e.g. a carousel, so that each jig may be rotated. Further, the substrates in jig(s) may be both rotated and spun in an orbit around a vertical axis which is normal to the center point of the jig when it is in a horizontal, bottom-end-down position, e.g. a female plate mold lying flat on its bottom side, thereby enabling the powder to flow and thoroughly coat the substrate during heating. For example, one or more than on jig may be spun on a substrate holder comprising a stand having rotably mounted on it one or more than one jig which may be adjusted to tilt at any desired angle, e.g. 0.1° to 45° from horizontal, for example 0.5° to 25° from horizontal, and wherein the jig may be spun so that it orbits the vertical axis of the stand. In this manner, the coating on a tilted substrate can flow, whether melted or not, to all parts of the substrate by the force of gravity and the angular momentum created by the orbital motion, thereby forcing the coating into the pores of the substrate.

In a continuous coating process, one or more than one substrate may be placed in a corresponding number of jigs in a carousel in which each jig is rotated, i.e. a substrate holder apparatus, on a conveyor moving along a desired path. Vacuum may be applied from each substrate holder at various stages during the coating process , for example, while powder is applied on to the substrate, whereby the added deposition force dramatically improves the transfer efficiency of the powder. A conveyor path may stop any jig or jigs may when an applicator is aimed directly at one or more of them. Further, a conveyor path be aligned to stop to heat the one or more than one substrate at one or more than one point at which a single axis is both normal to the center point of any heat source or bulb when it is pointed straight down and normal to the center point of at least one jig when the jig is in a horizontal, bottom-end-down, position, i.e. one vertical axis passes through the center of a jig when lying flat and passes through the centerpoint of a heat source or bulb that hangs vertically. For example, a conveyor carrying one or more than one jig may be adapted to stop at one or more than one point where all jigs are aligned directly under one or more than one heat source, e.g. a hanging bulb or a series of hanging bulbs. Further, anywhere the conveyor stops, such as for heating or during heating after a film has formed or flowed out, a vacuum may be applied to any substrate via the substrate holder. Still further, vacuum may be applied to any substrate as it is conveyed over a path of a predetermined length, for example, via a flexible hose of from 1 to 5 meters in length. In this way, a substrate can be held in its holder while it is conveyed from processing stage to processing stage, thereby enabling faster conveyance through the process.

Alternatively, in a non-continuous process, one or more than one heat source or one or more than one substrate holder, with or without a vacuum source, may be moved by hand from processing stage to processing stage. Likewise, rotary substrate motion may be created by hand to enable even distribution of heat or radiation over any number of substrates.

Examples of equipment that may be used to make the coating of the present invention may comprise a continuous assembly of one or more than one substrate holder mounted on a conveyor, such as a chain-on-edge conveyor or a chain-sprocket-spindle conveyor, one or more than one known application device mounted above or aside of the conveyor, as well as one or more than one a separate heat or radiation source mounted above the conveyor, such as a heat and/or curing lamp. However, a stand alone substrate holder apparatus, heat source and applicator device may be used in a non-continuous process, e.g. one done by hand.

Powder may be applied with, for example, electrostatic spray coating spray guns, including triboelectric charging spray guns, corona charging spray guns, electromagnetic brush (EMB) technology, or fluidized beds.

Heat sources may comprise a medium wave infrared (IR) lamps or short wave IR lamps. Heat sources may be used to flow out and/or to cure thermally curable resins.

UV curing lamps may comprise any medium pressure mercury-vapor lamp, iron doped mercury-vapor lamp, and/or gallium doped mercury-vapor lamp, e.g., 600-watt Fusion H-, D- and/or V-lamp. Electron beam radiation may be used instead of UV radiation, if desired.

A substrate holder apparatus of the present invention (10), FIG. 1, may comprise a holder for any substrate, the holder comprising a perforated female pattern or jig (11) molded into shape of the substrate which has small, from 0.5 to 3 mm in diameter, holes (12) spaced throughout which lead into an enclosed chamber (13) that is attached to a vacuum line (14) having a valve (15) and a pressure meter gauge (17). One or a plurality of holes (12) may be spaced radially, randomly or evenly throughout each jig for vacuum contact with the substrate. Thus, there are no holes or hold points used to attach and ground the part. Jig (11) may be constructed of aluminum or other metal, e.g. steel, zinc, tin or alloys, to ground the substrate. The apparatus may be adjustably fixed to a stand (15) for ease of use, allowing the jig to be tilted or to lie horizontally.

An example of an orbiting substrate holder, which may also rotate a substrate, may be an Orbitron Rotator II, from Boekel Scientific, Feasterville, PA, which has been fitted with a metal collar into which one or more than one jig fits flush at its outer dimension, e.g. its outer diameter, and having within it a slot or an indentation into which each jig is mounted. A further example of a spinning or orbiting substrate holder may comprise a tilt-adjustable frame adapted to receive one or more than one jig, the frame having a rigid vertical axle which extends downward from the base of one or more jig located under the jig or jigs to a drive connection, e.g. a drive shaft, motor, or connection to a motor, conveyor chain or conveyor sprocket that spins the axle. Still further, an orbiting substrate holder may also provide rotation through a flexible, differentially driven vertical axle extending coaxially within the rigid vertical axle from the bottom of the jig itself downward to a drive connection, drive shaft, motor, or connection to a motor, conveyor chain or conveyor sprocket which spins the flexible axle independently of the rigid axle, for example by connection to a different motor, a different chain or a different sprocket from that to which the rigid axle connects. Accordingly, a rotably mounted jig may be tilted, rotated and orbited (spun) around its vertical axis while it rotates.

Substrates to be coated according to the present invention may comprise any biodegradable substrates which contain enough moisture to be minimally conductive, for example 1.0 to 10 wt. % moisture, such as 6 wt. % moisture. Examples of substrate may include those used in the food service industry, for example starch foam biodegradable trays, cups, plates, films, and other food containers, paper substrates paper cups, plates, films, and other food containers, cardboard. Other substrates may include biodegradable films and sheets used in making disposable personal substrates, such as diapers, personal napkins, incontinence pads, tampons; and used in graphic arts, such as digital prints. Substrates may be formed from foamed or destructurized starch, biodegradable plastic, starch-biodegradable plastic blends, or paper and should have sufficient moisture within them to insure that they are minimally conductive, for example 2 to 10 wt. % of moisture, or 3 to 7 wt. %. Such substrates may be formed from starch or a blend of starch and biodegradable plastic. Biodegradable plastic substrates, and starch-plastic blend substrates may be made from any biodegradable polyester used in the instant powder composition, and may also include poly(vinyl lactam) such as poly(N-vinylpyrrolidinone), polylactams such as polycaprolactone, polyethers, polyglycols, and polyorthoesters.

Non-biodegradable foam substrates made for any of the above uses, and for insulating containers like coolers, may be powder coated with degradable resins or with epoxy, acrylic, polyester and other non-biodegradable resins according to any method described in this specification. Illustrations of present invention may be found in the following examples:

### EXAMPLES

Two separate batches of a degradable polybutylene adipate-co-terephthalate polymer, batch A polyethylene adipate(approx.15 mole%)-co-terephthalate(approx. 85 mole%) and batch B polybutylene adipate(40 mole%)-co-terephthalate(60 mole%) were sifted through a mesh screen. The volatiles content of each batch was 0.30 wt. %.

In the following examples 1 to 8, a starch plate was coated in the coating apparatus shown in FIG. 1. The plate was made from a mixture of potato starch, calcium carbonate and water. The moisture content of the plates varied from 6.0 wt. % to 7.03 wt. %.

### EXAMPLE 1

A coating of batch A (sifted 140 mesh) was applied to the plate using an electrostatic gun with a fluidized hopper while a vacuum of 126.9 mm/Hg was drawn from underneath the plate. The plate was heated for 4 minutes in an electric convection oven at a temperature of 450°F (232°C). In the coating film thus formed, the coated substrate did not warp but was very yellow.

### EXAMPLE 2

A coating of batch A (sifted 140 mesh) containing the ground resin and 1 % batch weight of an acrylic oligomeric melt flow aid was applied to the plate using a an electrostatic gun with a fluidized hopper while a vacuum of 126.9 mm/Hg was drawn from underneath the plate. The plate was heated for 4 minutes in an electric convection oven at a temperature of 450°F (232°C). A coating film thus formed was pinhole free, but had chunks on its surface.

### EXAMPLE 3

A coating of batch B (sifted 140 mesh) containing the ground resin and 2% batch weight of an acrylic oligomeric melt flow aid was applied to the plate using an electrostatic gun with a fluidized hopper while a vacuum of 126.9 mm/Hg was drawn from underneath the plate. The plate was heated for 4 minutes in an electric convection oven at a temperature of 450°F (232°C). A coating film thus formed was pinhole free, but had a slightly grainy appearance.

### EXAMPLE 4

A coating containing 80% wt. of batch A (sifted 70 mesh) and 20% wt. of batch B (sifted 40 mesh) was applied to the plate using an electrostatic gun with a fluidized hopper while a vacuum of 126.9 mm/Hg was drawn from underneath the plate. The plate was rotated and heated for 5 minutes with a medium wave IR lamp at 80% intensity. The lamp to part distance was 15 in. (37.5 cm). A coating film thus formed was pinhole free and slightly browned.

### EXAMPLE 5

A coating containing 40% wt. of batch A (sifted 70 mesh) and 60% wt. of batch B (sifted 40 mesh) was applied to the plate using an electrostatic gun with a fluidized hopper while a vacuum of 126.9 mm/Hg was drawn from underneath the plate. The plate was rotated and heated for 5 minutes with a medium wave IR lamp at 75% intensity. The lamp to part distance was 15 in. (37.5 cm). A coating film thus formed was pinhole free and slightly browned.

### EXAMPLE 6

A coating containing 30% wt. of batch A (sifted 70 mesh) and 70% wt. of batch B (sifted 40 mesh) was applied to the plate using an electrostatic gun with a fluidized hopper while a vacuum of 126.9 mm/Hg was drawn from underneath the plate. The plate was rotated and heated for 4.5 minutes with a medium wave IR lamp at 75% intensity. The lamp to part distance was 15 in. (37.5 cm). A coating film thus formed was pinhole free and less browned than that of Example 5.

### EXAMPLE 7

A coating containing 10% wt. of batch A (sifted 70 mesh) and 90% wt. of batch B (sifted 40 mesh) was applied to the plate using an electrostatic gun with a fluidized hopper while a vacuum of 126.9 mm/Hg was drawn from underneath the plate. The plate was rotated and heated for 5 minutes with a medium wave IR lamp at 75% intensity. The lamp to part distance was 15 in. (37.5 cm). A coating film thus formed was mostly smooth and pinhole free and had little observable browning.

### EXAMPLE 8

A two layer coating was formed from a layer of batch B (sifted 80 mesh) and 2 % of acrylic oligomeric melt flow aid using an electrostatic gun with a fluidized hopper while a vacuum of 126.9 mm/Hg was drawn from underneath the plate. The coating was heated for 2 minutes with a medium wave IR lamp at 75% intensity, the lamp to part distance being 15 in. (37.5 cm). A second coating layer of batch A (sifted 70 mesh) and 1 % of acrylic oligomeric melt flow aid was applied using an electrostatic gun with a fluidized hopper while a vacuum of 126.9 mm/Hg was drawn from underneath the plate. The resulting coating was heated for 4 minutes with a medium wave IR lamp at 75% intensity, the lamp to part distance being 15 in. (37.5 cm). A coating film thus formed was smooth and pinhole free and the plate was slightly browned.

### EXAMPLES 9 AND 10

In Examples 9 and 10, batch A and batch B, each containing 0.2 phr of a silica dry flow agent, were cryoground in liquid nitrogen. Resulting batch A had an average particle diameter of 52.28 µm, while batch B had an average particle diameter of 64.03 µm. The volatiles content of each batch was 0.30 wt. %.

### EXAMPLE 9

A coating of batch B (sifted 200 mesh) and 1 % of acrylic oligomeric melt flow aid using an electrostatic gun with a fluidized hopper. The plate was hand rotated every 30 seconds as well as orbited @ 6 orbits/minute (spun) and heated for 2.5 minutes with a medium wave IR lamp at 90% intensity. The lamp to part distance was 15 in. (37.5 cm). Vacuum was applied from underneath the plate via substrate holder apparatus immediately following melt flow. Minimal discoloration was observed.

### EXAMPLE 10

A coating of batch B (sifted 200 mesh) and 1 % of acrylic oligomeric melt flow aid using an electrostatic gun with a fluidized hopper. The plate was hand rotated every 30 seconds as well as orbited @ 6 orbits/minute (spun) and heated for 2.5 minutes with a medium wave IR lamp at 90% intensity. The lamp to part distance was 15 in. (37.5 cm). Vacuum was applied from under the plate via the substrate holder apparatus immediately following melt flow. Minimal discoloration was observed.

Examples 9 and 10 illustrate that with the use of part rotation and spinning, even in the absence of a vacuum during application and flow out, a powder coating on a starch foam substrate can be provided which has excellent film properties.

## Claims

1. A powder composition comprising one or more than one finely divided resin chosen from a thermoplastic degradable copolyester resin containing both aliphatic and aromatic groups, a mixture of cyclic oligomeric polyester resin, ring opening polymerization catalyst and degradable polyester, a degradable UV curable polyester, a degradable thermosetting polyester resin, and mixtures thereof,
wherein the powder has an average particle size or diameter, as determined by laser light scattering, of from 30 to 125 µm.

2. A composition as claimed in claim 1 comprising one or more than one thermoplastic degradable copolyester containing both aliphatic and aromatic groups which comprises the reaction product of one aromatic reactant and three or more aliphatic reactants including one or more than one aliphatic diol, one or more than one aliphatic diacid, and one or more than one aliphatic diol, polyol or diacid having 2, 4, 6, 8 or 12 carbon atoms.

3. A composition as claimed in claim 2, wherein said thermoplastic degradable polyester comprises the reaction product of one or more than one reactants chosen from ethylene glycol, butylene glycol, hexanediol, di(ethylene glycol), di(propylene glycol), tri(ethylene glycol), tetra(ethylene glycol), penta(ethylene glycol) and hexa(ethylene glycol), oxalic acid, succinic acid, adipic acid, 1,4-cyclohexanedicarboxylic acid, 1,3-cyclohexanedicarboxylic acid, diglycolic acid, suberic acid, sebacic acid, 1,12-dodecanedioic acid and their mixtures.

4. An apparatus for holding substrates for coating comprising:
one or more than one perforated female pattern or jig molded in the shape of a substrate, and
a base or stand for holding said one or more than one jig and having within it at least one enclosed chamber attached to one or more than one vacuum line,
wherein the perforations in each of said jig or jigs lead into said at least one enclosed chamber.

5. An apparatus as claimed in claim 4, wherein said one or more than one jig is adjustably and rotably mounted on said stand so each jig may be both rotated and/or spun in an orbit around a vertical axis which is normal to the center point of each jig when it is in a horizontal, bottom end down position.

6. An apparatus as claimed in claim 4 mounted on a conveyor above which is mounted a separate heat source or radiation source, such that the axis of said source that is normal to the center point of said heat source when it is pointed straight down meets the said vertical axis which is normal to the center point of said one or more than one jig when it is in a horizontal, bottom end down position at at least one point to form a single vertical axis.

7. A method of forming a powder coating from the composition as claimed in any one of claims 1 to 3 comprising placing a substrate in a perforated jig attached to a vacuum source, applying the said powder composition to the substrate, optionally with vacuum assistance, and heating the said substrate with a heat source to flow out said powder or form a melt of said powder and to form a coating film on the substrate surface.

8. A method as claimed in claim 7, further comprising moving said jig and/or heat source while heating said powder that has been applied to said substrate either during or after flow out or forming a melt of said powder, so as to thoroughly coating all surfaces and pores of the substrate to form a coating.

9. A coated biodegradable substrate made by the method as claimed in claim 8.

10. A coated biodegradable substrate as claimed in claim 9, wherein the substrate is a starch or starch-plastic blend food service article or container.
